# EUROPÄISCHE PATENTSCHRIFT

(11) **EP 4 519 110 B1**
(45) Veröffentlichungstag und Bekanntmachung des Hinweises auf die Patenterteilung: **23.09.2026**
(21) Anmeldenummer: 23736321.3
(22) Anmeldetag: 29.06.2023
(51) Int. Cl.: B60K 35/00, B60K 35/10, B60K 35/22, G06F 9/455

(54) **VERFAHREN UND PROZESSORSCHALTUNG ZUM BETREIBEN EINER KRAFTFAHRZEUG-BEDIENVORRICHTUNG MIT ZWEI BENUTZERSCHNITTSTELLEN SOWIE KRAFTFAHRZEUG**
METHOD AND PROCESSOR CIRCUIT FOR OPERATING A MOTOR VEHICLE OPERATING DEVICE WITH TWO USER INTERFACES, AND MOTOR VEHICLE
PROCÉDÉ ET CIRCUIT PROCESSEUR POUR FAIRE FONCTIONNER UN DISPOSITIF DE COMMANDE DE VÉHICULE AUTOMOBILE COMPRENANT DEUX INTERFACES UTILISATEUR ET VÉHICULE AUTOMOBILE

(30) Priorität: 07.07.2022 DE 102022116990
(43) Veröffentlichungstag der Anmeldung: 12.03.2025
(73) Patentinhaber: CARIAD SE, 38440 Wolfsburg (DE)
(72) Erfinder: LERZER, Jürgen, 92318 Neumarkt (DE)
(74) Vertreter: Hofstetter, Schurack & Partner
(86) Internationale Anmeldenummer: PCT/EP2023/067855
(87) Internationale Veröffentlichungsnummer: WO 2024/008552

(56) Entgegenhaltungen:
- EP-A1- 3 805 922
- DE-A1- 102005 035 111
- DE-A1- 102007 034 272
- DE-A1- 102020 116 988
- US-A1- 2007 129 864
- US-A1- 2020 310 770

## Beschreibung

Die Erfindung betrifft ein Verfahren zum Betreiben einer Bedienvorrichtung eines Kraftfahrzeugs. Eine solche Bedienvorrichtung kann auf einer Bildanzeigeeinheit eine Benutzerschnittstelle (UI - User Interface) ausgeben, über welche einem Benutzer Bedienelemente, beispielsweise Buttons und/oder Schieber und/oder Menüs, angezeigt werden können. Ein Benutzer kann diese Bedienelemente über ein berührungssensitives Bedienfeld bedienen. Ein solches Bedienfeld kann als Touchpad bereitgestellt sein. Das Bedienfeld kann separat von der Bildanzeigeeinheit angeordnet oder mittels eines so genannten Berührungsbildschirms (Touchdisplay) über die Benutzerschnittstelle überlagert sein.

**In** einem Kraftfahrzeug ist der Fahrer in der Regel an einem anderen Anzeigeinhalt einer Benutzerschnittstelle interessiert als beispielsweise ein Beifahrer oder ein anderer Passagier des Kraftfahrzeugs. Während ein Fahrer eine Benutzerschnittstelle benötigt, die ihm die Führungsaufgabe des Kraftfahrzeugs, also das Führen des Kraftfahrzeugs (Längsführung und/oder Querführung) erleichtert oder ihn dabei unterstützt, ist ein Beifahrer oder Passagier interessiert an von der Fahrzeugführung unabhängigen Bedienmöglichkeiten, wie beispielsweise der Wiedergabe eines Medieninhalts (Video und/oder Audio) und/oder dem Einsehen von Informationsinhalten (beispielsweise Internet und/oder E-Mail, um nur Beispiele zu nennen). Zudem ist für die Bedienung des Fahrzeugsystems in der Regel eine weitere Systembedienschnittstelle notwendig, die beispielsweise das Bedienen der Klimaanlage und/oder des Schiebedaches und/oder das Schalten des Warnblinkers ermöglicht, um nur Beispiele zu nennen.

Möchte man in einem Kraftfahrzeug eine fahrerbezogene Benutzerschnittstelle sowie eine passagierbezogene Benutzerschnittstelle sowie eventuell zusätzlich eine Systembedienschnittstelle bereitstellen, so ist entsprechend viel Bauraum für Bedienvorrichtungen notwendig, was dem Wunsch nach einer kompakten Bauweise eines Kraftfahrzeugs entgegensteht. Weil mit jeder Bedienvorrichtung auch ein entsprechendes Steuergerät oder ein entsprechender Computer zum Betreiben der Benutzerschnittstelle notwendig ist, kann dies zur Notwendigkeit der Installation von bis zu drei unterschiedlichen Steuergeräten oder Computern (fahrerbezogene Benutzerschnittstelle, passagierbezogene Benutzerschnittstelle und Systembedienschnittstelle) erfordern.

Aus der DE 10 2004 033 275 A1 und der DE 10 2016 224 635 A1 ist bekannt, dass bei einer Bedienvorrichtung eines Kraftfahrzeugs zusätzlich erfasst werden kann, welche Person ein Bedienelement der Bedienvorrichtung aktuell bedient. Handelt es sich bei dem bedienenden Benutzer um den Fahrer, so wird die dem Bedienelement zugeordnete Funktion der Bedienvorrichtung nur freigegeben, wenn es sich um eine Funktion handelt, die für eine Nutzung durch den Fahrer freigegeben ist. Hierdurch soll verhindert werden, dass der Fahrer dazu verführt wird, Funktionen zu bedienen, die ihn von seiner Fahraufgabe oder Führungsaufgabe im Kraftfahrzeug ablenken könnten.

Aus der DE 10 2009 046 451 A1 ist bekannt, dass mittels einer Blickrichtungserfassung in einem Kraftfahrzeug erkannt werden kann, welche Person aktuell einen Bedienwunsch an einer Bedienvorrichtung des Kraftfahrzeugs hat. Wird eine Berührungseingabe erfasst und gleichzeitig erkannt, welche Person aktuell ihren Blick auf die Bedienvorrichtung gerichtet hat, ist die bedienende Person hierdurch identifiziert.

In der US 2020 / 0 310 770 A1 werden Techniken für eine angepasste konsolidierte digitale Erfahrung offenbart.

Aus der EP 3 805 922 A1 ist eine erweiterbare Rechnerarchitektur für Fahrzeuge bekannt.

Die DE 10 2005 035 111 A1 beschreibt ein Bedien- und Anzeigesystem für ein Fahrzeug mit einer zentral angeordneten optischen Anzeigeeinheit, welche zeitgleich zwei unterschiedliche Bildausgaben für unterschiedliche Betrachtungswinkelbereiche darstellt.

Die DE 10 2007 034 272 A1 beschreibt ein Anzeige- und Bediensystem für ein Kraftfahrzeug umfassend eine Multi-View-Anzeigevorrichtung, mittels der zeitgleich mindestens zwei unterschiedliche Darstellungen für eine Betrachtung aus unterschiedlichen Betrachtungswinkelbereichen anzeigbar sind.

Die US 2007 / 0 129 864 A1 beschreibt eine Fahrzeug-Anzeigevorrichtung mit einem Anzeigebereich, der Bilder jeweils auf einem ersten Bildschirm für einen Fahrer und auf einem zweiten Bildschirm für einen Beifahrer auf einem gemeinsamen Display anzeigt, das aus einem Blickwinkel des Fahrers und einem anderen Blickwinkel des Beifahrers sichtbar ist.

Die DE 10 2020 116 988 A1 beschreibt ein Verfahren zum Betreiben eines Informationssystems eines Fahrzeugs, bei dem ein Prozessorsubsystem eines Ein-Chip-Systems eines Informationssystems eines Fahrzeugs eine Systempartition des Ein-Chip-Systems und eine Fahrzeug-Infotainment-Partition des Ein-Chip-Systems ausführt.

Der Erfindung liegt die Aufgabe zugrunde, mehrere unterschiedliche Benutzerschnittstellen, insbesondere eine fahrerbezogene sowie eine passagierbezogene Benutzerschnittstelle, in einem Kraftfahrzeug in kompakter Bauweise bereitzustellen.

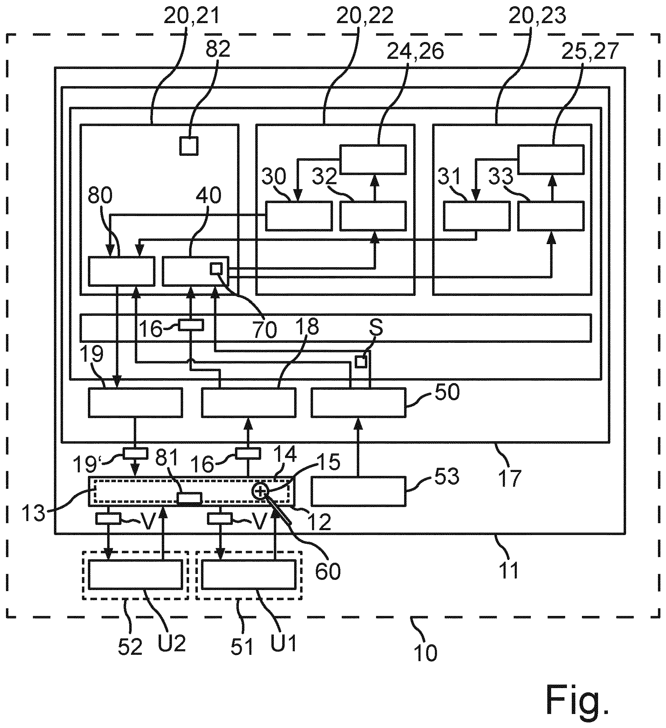

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figur beschrieben.

Als eine Lösung umfasst die Erfindung ein Verfahren zum Betreiben einer Bedienvorrichtung eines Kraftfahrzeugs. Durch eine Prozessorschaltung der Bedienvorrichtung werden zumindest zwei Laufzeitumgebungen mit einer jeweiligen eigenen Benutzerschnittstelle unabhängig voneinander betrieben. Die jeweilige graphische Benutzerschnittstelle (User Interface) kann beispielsweise durch einen jeweiligen Window-Manager eines Betriebssystems oder durch eine HMI (Human Machine Interface) oder ein GUI (Graphical User Interface) mit den eingangs beschriebenen Bedienelementen realisiert sein, die beispielsweise einer jeweiligen in der jeweiligen Laufzeitumgebung realisierten oder implementierten Fahrzeugfunktion zugeordnet sein können, um diese mittels des Bedienelements zu bedienen. Als Laufzeitumgebung kann beispielsweise jeweils ein Betriebssystem oder ein sogenannter Container vorgesehen sein.

Durch ein für die Laufzeitumgebungen bereitgestelltes gemeinsames berührungssensitives Bedienfeld der Bedienvorrichtung werden nacheinander und/oder gleichzeitig Berührungseingaben (so genannte Touch-Eingaben) eines jeweiligen Eingabeelements zumindest eines Benutzers empfangen. Das Eingabeelement kann beispielsweise ein Finger eines Benutzers oder es kann die Hand mit mehreren Finger sein. Anstelle einer solche Gliedmaße kann auch ein anderes Eingabeelement, beispielsweise ein in der Hand gehaltener Eingabestift (Stylus) verwendet werden. Allgemein wird also an dem Bedienfeld eine Berührungseingabe eines Eingabeelements eines Benutzers erfasst.

Beim Berühren des Bedienfeldes wird also in an sich bekannter Weise der Berührort sensiert und durch jeweilige Berührungsdaten, beispielsweise die Berührungskoordinaten, beschrieben. Die entsprechenden Berührungsdaten werden an eine Eingabemanagementeinheit der Bedienvorrichtung signalisiert. Zudem wird durch einen Eingabeursprungsdetektor der Bedienvorrichtung vor und/oder während der jeweiligen Berührungseingabe detektiert, von welchem Ursprungsbereich her das Eingabeelement auf das Bedienfeld ragt. Hierbei können mehrere Ursprungsbereiche vordefiniert sein, beispielsweise kann jeder Fahrzeugsitz, insbesondere können der Fahrersitz und der Beifahrersitz, jeweils einen Ursprungsbereich darstellen. Ein Ursprungsbereich stellt also einen Aufenthaltsbereich oder Aufenthaltsvolumen dar, in welchem sich ein Benutzer aufhalten kann und/oder von dem aus ein Benutzer mit einem Eingabeelement zu dem Bedienfeld hin fassen kann. Es können auch eine rechte Raumhälfte und eine linke Raumhälfte (entlang der Fahrzeuglängsachse gesehen) als Ursprungsbereich definiert sein. Der Eingabeursprungsdetektor kann beispielsweise mit den Mitteln aus dem eingangs beschriebenen Stand der Technik realisiert sein. Wird also detektiert, von wo aus mittels des Eingabeelements auf das Bedienfeld gedrückt oder dieses berührt wird, ist ermittelbar, von welchem Ursprungsbereich aus oder welche Person, also beispielsweise der Fahrer oder ein Beifahrer, das Bedienfeld mit dem Eingabeelement bedient oder berührt. Der detektierte Ursprungsbereich wird ebenfalls an die Eingabemanagementeinheit signalisiert, so dass in der Eingabemanagementeinheit zum einen die Berührungseingabe selbst (beispielsweise die Berührungskoordinaten des Berührorts auf dem Bedienfeld) sowie der Ursprungsbereich, von welchem aus die Berührungseingabe erfolgt ist, bekannt ist oder vorliegt.

Durch die Eingabemanagementeinheit wird dem signalisierten Ursprungsbereich gemäß Zuordnungsdaten einer der Laufzeitumgebungen zugeordnet. Solche Zuordnungsdaten kann der Fachmann in der Eingabemanagementeinheit bereitstellen oder hinterlegen. Mit anderen Worten legt die Eingabemanagementeinheit fest, für welche Laufzeitumgebung die Berührungseingabe bestimmt ist, wenn die Berührungseingabe aus einem bestimmten Ursprungsbereich heraus vorgenommen wurde. Die jeweilige signalisierte Berührungseingabe wird entsprechend an die dem signalisierten Ursprungsbereich zugeordnete Laufzeitumgebung weitergeleitet. Dort steuert dann ein Eingabemodul dieser Laufzeitumgebung deren Benutzerschnittstelle gemäß der weitergeleiteten Berührungseingabe an. Das Eingabemodul nimmt also die Berührungseingabe entgegen, z.B. die Berührkoordinaten. Innerhalb der Laufzeitumgebung kann also vorgesehen sein, dass das Eingabemodul die Benutzerschnittstelle in derselben Weise ansteuert, wie es auch ohne die gemeinsame Nutzung des Bedienfeldes vorgesehen wäre, wenn also das Eingabemodul direkt (also ohne den Umweg über die Eingabemanagementeinheit) mit dem Bedienfeld gekoppelt wäre. Mittels der Eingabemanagementeinheit erfolgt nun aber in Abhängigkeit davon, von welchem Ursprungsbereich aus mit einem Eingabeelement das Bedienfeld berührt wird oder betätigt wird, eine Bedienung der jeweils zugeordneten Laufzeitumgebung, das heißt deren Benutzerschnittstelle.

Durch die Erfindung ergibt sich der Vorteil, dass zwei unterschiedliche Benutzerschnittstellen mit nur einem Bedienfeld, beispielsweise einem Touchpad oder der berührungssensitiven Anzeigefläche eines Touchdisplays, bedient werden können. Somit ist kein Bauraum für unterschiedliche Bedienfelder, jeweils eines pro Benutzerschnittstelle, notwendig.

Die hierfür definierten Ursprungsbereiche sind jeweils ein jeweils im Kraftfahrzeug vordefinierter Raumbereich, in welchem sich jeweils insbesondere einer der Benutzer aufhalten kann. Insbesondere handelt es sich jeweils um einen Sitzplatz, der bestimmungsgemäß für eine einzelne Person vorgesehen ist. Der Eingabeursprungsdetektor kann entsprechend dazu eingerichtet sein, bei einer Signalisierung einer Berührungseingabe am Bedienfeld ausgehend von dem das Bedienfeld berührenden Eingabeelement eine Gliedmaße des Benutzers rückzuverfolgen, also deren geometrischen Verlauf im Fahrzeuginnenraum, um zu detektieren, in welchem Ursprungsbereich, das heißt in welchem Raumbereich, sich dieser Benutzer aufhält, zu dem das Eingabeelement gehört. Somit kann der Ursprungsbereich identifiziert werden.

Erfindungsgemäß wird die jeweilige Laufzeitumgebung jeweils als ein Betriebssystem realisiert oder betrieben, und die sich hierdurch ergebenden zwei Betriebssysteme können mittels unterschiedlicher virtueller Maschinen und/oder mittels unterschiedlicher Prozessoren der Prozessorschaltung betrieben werden. Somit kann jede Laufzeitumgebung für sich in der Weise ausgestaltet sein, dass sie implementiert oder programmiert ist, als ob sie allein oder ohne weitere Laufzeitumgebung mit dem Bedienfeld und/oder der Bildanzeigeeinheit gekoppelt wäre. Es ist somit keine aufwendige Anpassung der jeweiligen Laufzeitumgebung an dem beschriebenen parallelen Betrieb mehrerer Laufzeitumgebungen notwendig.

Die Erfindung umfasst auch Weiterentwicklungen, durch die sich zusätzliche Vorteile ergeben.

In der beschriebenen Weise kann das Bedienfeld als Touchpad ausgestaltet sein, das getrennt von einer jeweiligen Bildanzeigeeinheit vorgesehen sein kann, sodass für jede Benutzerschnittstelle eine eigene Bildanzeigeeinheit (z.B. ein Ausgabebildschirm) vorgesehen sein kann.

Gemäß einer Weiterentwicklung ist dagegen vorgesehen, dass durch eine Anzeigemanagementeinheit die erste und die zweite Benutzerschnittstelle auf derselben Bildanzeigeeinheit angezeigt werden. Bei dieser Bildanzeigeeinheit kann es sich in der beschriebenen Weise um einen Bildschirm (beispielsweise um ein OLED-Display oder ein LCD-Display) handeln oder es kann sich um ein Head-up-Display handeln. Bei der Nutzung einer gemeinsamen Bildanzeigeeinheit kann das Bedienfeld in der beschriebenen Weise separat als eigenständiges oder beabstandet zur Bildanzeigeeinheit angeordnetes Touchpad vorgesehen sein oder es kann in die Bildanzeigeeinheit integriert und zu einem Berührungsbildschirm kombiniert sein. Durch die Weiterbildung ergibt sich der Vorteil, dass auch nur eine einzelne Bildanzeigeeinheit zum Darstellen mehrerer Bildnutzerschnittstellen notwendig ist. Hierdurch ist noch weniger Bauraum beim Bereitstellen der Bedienvorrichtung notwendig. Die Anzeigemanagementeinheit kann beispielsweise durch einen Displaymanager, das heißt ein Programmmodul eines Betriebssystems der Prozessorschaltung, und/oder mittels einer Graphikschnittstelle (beispielsweise einer Graphikkarte und/oder einem Graphikchip) der Prozessorschaltung realisiert sein.

Bei Nutzung einer gemeinsamen Bildanzeigeeinheit müssen mehrere Benutzer, beispielsweise jeweils einer pro Ursprungsbereich, die Bildanzeigeeinheit betrachten können, um die jeweils für ihren Ursprungsbereich bestimmte Benutzerschnittstelle betrachten oder einsehen zu können.

Gemäß einer Weiterentwicklung ist verhindert, dass ein Benutzer in einem Ursprungsbereich einen Bildinhalt oder Anzeigeinhalt zu Gesicht bekommt, der zu einer Benutzerschnittstelle eines anderen Ursprungsbereichs gehört und der lediglich für den Benutzer in diesem anderen Ursprungsbereich bestimmt ist. Hierzu ist vorgesehen, dass eine schaltbar ausgestaltete Abschirmschicht in einem ersten Schaltzustand eine gerichtete Lichtabgabe von Licht der Bildanzeigeeinheit in einen ersten der Ursprungsbereiche und eine gleichzeitige Blockade der Lichtabgabe in einen zweiten der Ursprungsbereiche bereitstellt. Ist also diese Abschirmschicht aktiv, so kann der von der Abschirmschicht bedeckte Anzeigebereich der Anzeigeeinheit lediglich von dem ersten Ursprungsbereich aus gesehen werden, damit insbesondere nicht vom zweiten Ursprungsbereich aus. Insbesondere handelt es sich bei dem zweiten Ursprungsbereich um den Fahrerbereich, also den Raumbereich des Fahrersitzes, auf welchem der Fahrer beim Führen des Kraftfahrzeugs bestimmungsgemäß sitzt. Somit kann mittels der Abschirmschicht erreicht werden, dass keine Lichtabgabe an den Fahrer erfolgt, wenn der erste Schaltzustand eingestellt ist. So kann beispielsweise ein Unterhaltungsfilm oder allgemeine ein Unterhaltungsinhalt einem Passagier des Kraftfahrzeugs in dem ersten Ursprungsbereich mittels der Bildanzeigeeinheit präsentiert oder angezeigt werden, während der Fahrer durch die Blockade der Lichtabgabe in seinem zweiten Ursprungsbereich nicht abgelenkt wird oder eine Ablenkung verhindert ist. In einem zweiten Schaltzustand der Abschirmschicht ist dagegen die Lichtabgabe in den zweiten Ursprungsbereich zugelassen. Insbesondere ist sie dabei auch in den ersten Ursprungsbereich zugelassen. Somit kann im zweiten Schaltzustand auch vom zweiten Ursprungsbereich aus ein Anzeigeinhalt, der von der Abschirmschicht physisch überdeckt ist, auf der Bildanzeigeeinheit betrachtet werden. Eine solche Abschirmschicht wird im Stand der Technik als "Privacy-Mode"-Beschichtung oder "switchable privacy film" bezeichnet. Sie basiert in an sich bekannter Weise auf einer schaltbaren Lichtpolarisation. Eine entsprechende Abschirmschicht kann im Stand der Technik beschafft werden.

Durch die Anzeigemanagementeinheit, die die Ausgabe oder den Anzeigeinhalt der ersten und der zweiten Benutzerschnittstelle auf der Bildanzeigeeinheit steuert, wird das Schaltsignal zum Umschalten der Abschirmschicht zwischen den beiden Schaltzuständen in Abhängigkeit davon erzeugt, welcher Ursprungsbereich aktuell signalisiert wird, also aus welchem Ursprungsbereich heraus die aktuelle Berührungseingabe detektiert wurde, wie es durch den Eingabeursprungsdetektor detektiert wurde. Das Schaltsignal wird derart erzeugt, dass bei einer Berührungseingabe aus dem zweiten Ursprungsbereich (also beispielsweise aus dem Fahrerbereich) der zweite Schaltzustand eingestellt wird oder eingestellt gehalten wird (falls er beispielsweise schon eingestellt war). Somit ist sichergestellt, dass eine Berührungseingabe aus dem zweiten Ursprungsbereich auch dazu führt, dass der Anzeigeinhalt im Bereich der Abschirmschicht vom zweiten Ursprungsbereich aus einsehbar ist. Die Abschirmschicht kann in der beschriebenen Weise auf einem Bildschirm angeordnet sein oder (im Falle eines Head-up-Displays) in einem Projektor der Bildanzeigeeinheit und/oder auf einem Combiner der Bildanzeigeeinheit.

Gemäß einer Weiterentwicklung wird dagegen das Schaltsignal zum Einstellen des ersten Schaltzustands (Abschirmung der Lichtabgabe zum zweiten Ursprungsbereich hin) dann erzeugt, falls eine Signalquelle signalisiert, dass durch diese Signalquelle in einem von der Abschirmschicht überdeckten Anzeigebereich der Bildanzeigeeinheit ein Anzeigeinhalt einer vorbestimmten Kategorie ausgegeben wird oder einer solchen Kategorie zugeordnet ist, die vom zweiten Ursprungsbereich aus uneinsehbar sein soll. Hierdurch kann die eingangs aus dem Stand der Technik bekannte Funktionalität implementiert werden, dass ein Anzeigeinhalt, der beispielsweise vom Fahrer nicht eingesehen werden soll, mittels der Abschirmschicht durch einstellen des ersten Schaltzustands uneinsehbar bleibt. Durch Festlegen und Signalisieren einer entsprechenden Kategorie kann der Fachmann die Anzeigeinhalte nach Bedarf festlegen. Die Signalquelle kann beispielsweise eine Medienwiedergabe realisieren, die beispielsweise einen Unterhaltungsfilm in dem Anzeigebereich der Bildanzeigeeinheit darstellt. Die Signalquelle kann insbesondere Bestandteil der ersten Benutzerschnittstelle sein, die für einen Passagier, also nicht für den Fahrer, vorgesehen sein kann. Allgemein kann vorgesehen sein, dass die erste Benutzerschnittstelle die eingangs beschriebene passagierbezogene Benutzerschnittstelle und die zweite Benutzerschnittstelle die eingangs beschriebene fahrerbezogene Benutzerschnittstelle sein kann. Alternativ dazu kann auch beispielsweise eine erste Benutzerschnittstelle eine erwachsenenbezogene und die zweite Benutzerschnittstelle eine kindbezogene Benutzerschnittstelle sein, wodurch beispielsweise ermöglicht sein kann, dass in dem Kraftfahrzeug mitfahrende Kinder eine für sie geeignete Benutzerschnittstelle dargeboten bekommen. Die jeweilige Kategorie oder entsprechende Kategorieangaben können in der Signalquelle beispielsweise für unterschiedliche Medieninhalte vorgesehen sein und beispielsweise mittels einer Look-Up-Tabelle (LUT) ermittelt werden, wenn ein entsprechender Medieninhalt vom Benutzer in dem ersten Ursprungsbereich über die erste Benutzerschnittstelle ausgewählt wird.

Eingangs wurde beschrieben, dass auch die Bereitstellung einer dritten Benutzerschnittstelle, nämlich einer Systembedienschnittstelle zum Bedienen einer Systemumgebung des Kraftfahrzeugs, bevorzugt ebenfalls kompakt in dem Kraftfahrzeug bereitgestellt sein sollte. Eine Weiterentwicklung der Erfindung sieht hierzu vor, dass durch die Anzeigemanagementeinheit eine temporäre Systembedienschnittstelle der Systemumgebung der Prozessorschaltung temporär die jeweilige Benutzerschnittstelle der ersten und/oder der zweiten Laufzeitumgebung überlagert wird. "Temporär" meint hier, dass im Betrieb der Bedienvorrichtung das Überlagern nur für das Durchführen z.B. eines Bedienschritts erfolgt und vorher und hinterher wieder der überlagerte Anzeigeinhalt angezeigt wird. Die Systemumgebung kann beispielsweise als eine weitere Laufzeitumgebung implementiert sein oder es kann sich um ein Zusatzmodul oder ein Betriebssystem einer der bereits beschriebenen Laufzeitumgebungen handeln. Die Systemumgebung ist insbesondere dafür vorgesehen, eine Bedienung von Fahrzeuggeräten, beispielsweise einer Rückfahrkamera und/oder einer Klimaanlage und/oder einer Sitzmotorsteuerung und/oder einer Warnblinkanlage bereitzustellen, um nur Beispiele zu nennen. Die Systembedienschnittstelle kann hierbei temporär der jeweils aktuell dargestellten Benutzerschnittstelle überlagert werden, wie dies beispielsweise vorteilhaft sein kann, wenn eine Rückfahrkamera aktiviert wird, wenn detektiert wird oder weil ein Rückwärtsgang eines Getriebes des Kraftfahrzeugs eingestellt wird. Durch das Überlagern ergibt sich der Vorteil, dass eine Anzeigefläche für die Systembedienschnittstelle in der Größe unabhängig von den Abmessungen der jeweiligen Benutzerschnittstelle eingestellt werden kann. Zusätzlich oder alternativ zu einer temporären Systembedienschnittstelle, die lediglich während eines Betriebszustands eines vorbestimmten Geräts des Kraftfahrzeugs angezeigt wird, kann eine permanente Systembedienschnittstelle der Systemumgebung während des Betriebs dauerhaft in einem Systemanzeigebereich der Bildanzeigeeinheit eingeblendet werden. Eine solche permanente Systembedienschnittstelle kann in der beschriebenen Weise beispielsweise die Bedienung der Klimaanlage und/oder der Warnblinkanlage mittels entsprechend vorgesehener Bedienelemente bereitstellen. Hierdurch ergibt sich der Vorteil, dass mittels eines einzigen Bedienfelds und einer einzigen Bildanzeigeeinheit auch die dritte Benutzerschnittstelle, nämlich die Systembedienschnittstelle, in dem Kraftfahrzeug bereitgestellt werden kann.

Während des Überlagerns der temporären Benutzerschnittstelle sieht eine Weiterentwicklung vor, dass die jeweilige Berührungseingabe unabhängig von dem jeweils signalisierten Ursprungsbereich an die Systemumgebung weitergeleitet wird, wo ein Eingabemodul der Systemumgebung die temporäre Benutzerschnittstelle gemäß der Berührungseingabe ansteuert. Hierdurch ergibt sich der Vorteil, dass die Systemumgebung über die Systembedienung von jeder Person, das heißt unabhängig vom Ursprungsbereich, bedient werden kann.

Für den Fall, dass die Bildanzeigeeinheit die beschriebene Abschirmschicht aufweist, sieht eine Weiterentwicklung vor, dass während des Überlagerns der temporären Systembedienschnittstelle die Abschirmschicht in den zweiten Schaltzustand geschaltet wird, so dass also der Anzeigeinhalt und damit die temporäre Systembedienschnittstelle auch vom zweiten Ursprungsbereich aus gesehen oder eingesehen werden kann. Somit ist verhindert, dass beispielsweise ein Fahrer am Betrachten der temporären Systembedienschnittstelle gehindert ist.

Gemäß einer Weiterentwicklung wird durch die Eingabemanagementeinheit an die permanente Systembedienschnittstelle eine Berührungseingabe, die in einem auf dem Bedienfeld dem Systemanzeigebereich zugeordneten Erfassungsbereich erfasst wird, zusammen mit dem signalisierten Ursprungsbereich signalisiert. Somit ist in der Systemumgebung bekannt, von welchem Ursprungsbereich aus die permanente Systembedienschnittstelle bedient worden ist. Dies kann beispielsweise zum Auswählen eines Klimatisierungsbereichs einer Klimaanlage genutzt werden, da nun automatisiert derjenige Klimatisierungsbereich ausgewählt werden kann oder aktiviert werden kann, der dem signalisierten Ursprungsbereich zugeordnet ist. Erfolgt also beispielsweise eine Bedienung der permanenten Benutzerschnittstelle durch den Fahrer, so wird die Systembedienschnittstelle auf den Ursprungsbereich des Fahrers umgestellt, während bei einer Bedienung durch einen Beifahrer die Systembedienschnittstelle auf den Ursprungsbereich des Beifahrers umgestellt wird. Ist in der Bildanzeigeeinheit die Abschirmschicht vorgesehen, so kann diese derart angeordnet oder ausgestaltet sein, dass sie den Systemanzeigebereich der permanenten Systembedienschnittstelle ausspart. Handelt es sich bei der Bildanzeigeeinheit um einen Touchscreen oder Berührungsbildschirm, so ist natürlich der Erfassungsbereich deckungsgleich mit dem Systemanzeigebereich, das heißt, die Berührungseingabe erfolgt in diesem Fall in dem Systemanzeigebereich der permanenten Systembedienschnittstelle.

Die beiden Benutzerschnittstellen der beiden Laufzeitumgebungen können abwechselnd oder gleichzeitig angezeigt werden.

Gemäß einer Weiterentwicklung werden durch die Anzeigemanagementeinheit die erste und die zweite Benutzerschnittstelle abwechselnd angezeigt und ein Umschalten erfolgt jeweils abhängig von dem durch den Eingabeursprungsdetektor signalisierten Ursprungsbereich auf diejenige Laufzeitumgebung, an welche auch die Berührungseingabe weitergeleitet wird.

Somit ist sichergestellt, dass beim Berühren des Bedienfelds durch ein Bedienelement die zum signalisierten Ursprungsbereich gehörige oder passende Benutzerschnittstelle auf der Bildanzeigeeinheit angezeigt wird.

Alternativ dazu sieht eine Weiterentwicklung vor, dass durch die Anzeigemanagementeinheit beide Benutzerschnittstelle gleichzeitig in unterschiedlichen Anzeigebereichen der Bildanzeigeeinheit angezeigt werden. Eine jeweilige Berührungseingabe wird nur an die jeweilige Laufzeitumgebung durch die Eingabemanagementeinheit weitergeleitet, falls die Berührungseingabe in dem Anzeigebereich der Benutzerschnittstelle dieser Laufzeitumgebung liegt und der signalisierte Ursprungsbereich gemäß den Zuordnungsdaten dieselbe Laufzeitumgebung angibt. Somit kann also von einem bestimmten Ursprungsbereich aus nur derjenige Anzeigebereich bedient werden, in dem auch die Benutzerschnittstelle derjenigen Laufzeitumgebung angezeigt wird, die diesem Ursprungsbereich zugeordnet ist. Somit ist verhindert, dass beispielsweise ein Beifahrer die Benutzerschnittstelle der Laufzeitumgebung bedient, die dem Fahrer und dessen Ursprungsbereich zugeordnet ist. Der Beifahrer kann nur diejenige Benutzerschnittstelle bedienen, die seinem Ursprungsbereich, also beispielsweise dem Beifahrersitz, zugeordnet ist. Somit ist die gleichzeitige Anzeige beider Benutzerschnittstellen möglich, ohne dass hierdurch eine Fehlbedienung riskiert ist.

Gemäß einer Weiterentwicklung wird eine Multi-Touch-Technologie genutzt, die mehrere Berührungseingaben gleichzeitig an unterschiedlichen Berührorten des berührungssensitiven Bedienfelds erfasst. Somit kann für jede Berührungseingabe getrennt oder unabhängig die beschriebene Überprüfung dahingehend erfolgen, ob die Berührungseingabe aus demjenigen Ursprungsbereich stammt, der auch zu der Benutzerschnittstelle gehört, die durch die Berührungseingabe bedient worden ist. Somit können beispielsweise ein Fahrer und ein Beifahrer gleichzeitig ihre jeweilige Benutzerschnittstelle an dem Bedienfeld bedienen.

In der beschriebenen Weise ist die erste Laufzeitumgebung dafür vorgesehen, eine passagierbezogene Benutzerschnittstelle und/oder Passagierapplikationen bereitzustellen. In der beschriebenen Weise ist in vorteilhafter Weise die zweite Laufzeitumgebung mit einer fahrerbezogenen Benutzerschnittstelle vorgesehen, die für die Fahrzeugführung vorgesehene Fahrerapplikationen bereitstellt. Gemäß einer Weiterentwicklung wird durch den beschriebenen Eingabeursprungsdetektor der jeweilige Ursprungsbereich durch Erfassen des beschriebenen Eingabeelements (beispielsweise eine Gliedmaße und/oder ein Stylus) mittels zumindest eines Innenraumsensors erfasst, insbesondere einer Innenraumkamera (wie sie beispielsweise für die Insassenerfassung vorgesehen sein kann) und/oder eines Näherungssensors des Bedienfelds. Beispielsweise kann das Bedienfeld mehrere Näherungssensoren umfassen, die beispielsweise an Außenkanten des Bedienfelds angeordnet sein können. Reicht oder fasst dann ein Benutzer mit dem Bedienelement über eine dieser Außenkanten hinweg auf das Bedienfeld, so kann mittels des jeweiligen Näherungssensors sensiert werden, aus welcher Richtung das Bedienelement auf das Bedienfeld ragt. Der jeweiligen Außenkante kann dann beispielsweise einer der Ursprungsbereich zugeordnet sein, der dann als Ursprung der Berührungseingabe signalisiert werden kann. Der erste Ursprungsbereich ist dabei insbesondere ein Beifahrersitz und/oder ein Rücksitz. Der zweite Ursprungsbereich ist insbesondere der Fahrersitz.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird. So kann beispielsweise eine besondere Verarbeitungsroutine zur Fehlerbehandlung vorgesehen sein, falls unvorhergesehener Weise aus mehr als einem Ursprungsbereich gleichzeitig auf das Bedienfeld gegriffen wird und dies erkannt wird bzw. eine benötigte eindeutige Angabe eines einzelnen Ursprungsbereichs nicht möglich ist.

Um das Verfahren in einem Kraftfahrzeug durchführen zu können, umfasst die Erfindung auch eine Bedienvorrichtung für ein Kraftfahrzeug. Diese Bedienvorrichtung weist ein berührungssensitives Bedienfeld auf, beispielsweise ein Touchpad oder die berührungssensitive Anzeigefläche eines Touchscreens, wobei dieses Bedienfeld mit einer Ausführungsform der erfindungsgemäßen Prozessorschaltung gekoppelt ist. Die Bedienvorrichtung ist in der beschriebenen Weise dazu eingerichtet, eine Ausführungsform des erfindungsgemäßen Verfahrens durchzuführen.

Die Prozessorschaltung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung Programmcode aufweisen, der dazu eingerichtet ist, bei Ausführen durch die Prozessorschaltung die Ausführungsform des erfindungsgemäßen Verfahrens durchzuführen. Der Programmcode kann in einem Datenspeicher der Prozessorschaltung gespeichert sein. Die Prozessorschaltung kann z.B. zumindest eine Schaltungsplatine und/oder zumindest ein SoC aufweisen.

Die Erfindung umfasst auch ein Kraftfahrzeug, das eine Ausführungsform der erfindungsgemäßen Bedienvorrichtung aufweist. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Im Folgenden sind Ausführungsbeispiele der Erfindung beschrieben. Hierzu zeigt die einzige Figur:
- Fig.: eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Die Fig. zeigt ein Kraftfahrzeug 10, bei dem es sich um einen Kraftwagen, insbesondere einen Personenkraftwagen oder Lastkraftwagen, handeln kann. In dem Kraftfahrzeug kann eine Bedienvorrichtung 11 bereitgestellt sein, durch die beispielsweise ein Infotainmentsystem und/oder eine zentrale Bedienkonsole bereitgestellt sein kann. Die Bedienvorrichtung 11 kann beispielsweise einen Touchscreen als Bildanzeigeeinheit 12 aufweisen, durch welchen ein Anzeigeinhalt 13 ausgegeben oder angezeigt werden kann und der ein berührungssensitives Bedienfeld 14 auf weist, das dem Anzeigeinhalt 13 überlagert sein kann, so dass durch Antippen oder Berühren des Bedienfelds 14 ein dort an einem Berührort 15 eine Berührungseingabe 16 erzeugt wird, die dem dort angezeigten Anzeigeinhalt 13 zugeordnet sein kann. Die Bildanzeigeeinheit 12 kann beispielsweise als ein Bildschirm oder Touchscreen ausgestaltet sein. Die Bildanzeigeeinheit 12 kann beispielsweise in einer Mittelkonsole des Kraftfahrzeugs 10 angeordnet sein. Die Bedienvorrichtung 11 weist des Weiteren eine Prozessorschaltung 17 auf, die mit der Bildanzeigeeinheit 12 gekoppelt sein kann. Die Prozessorschaltung 17 kann beispielsweise aus dem Bedienfeld 14 der Bildanzeigeeinheit 12 die Berührungseingabe 16 mittels einer entsprechenden Schnittstellenschaltung 18 empfangen. Der Anzeigeinhalt 13 kann durch eine Bildausgabeschnittstelle 19 der Prozessorschaltung 17 gesteuert werden, die beispielsweise durch einen Graphikchip oder eine Graphikkarte realisiert sein kann.

Die Schnittstellenschaltung 18 kann in an sich bekannter Weise ausgestaltet sein, wie es im Zusammenhang mit berührungssensitiven Bedienfeldern 14 bekannt ist. Durch die Bildausgabeschnittstelle 19 können in an sich bekannter Weise Pixeldaten 19' an die Bildanzeigeeinheit 12 gesendet werden, die daraufhin einen jeweiligen visuellen Output oder eine jeweilige visuelle Ausgabe V des Anzeigeinhalts 13 an einen jeweiligen Benutzer U1, U2 ausgeben kann. Bei dem Benutzer U1 kann es sich um einen Passagier des Kraftfahrzeugs 10, beispielsweise einen Beifahrer handeln. Bei dem Benutzer U2 kann es sich um einen Fahrer des Kraftfahrzeugs 10 handeln, der aktuell das Kraftfahrzeug 10 führen kann.

In der Prozessorschaltung 17 werden mehrere Laufzeitumgebungen 20 betrieben, von denen eine Systemumgebung 21, eine weitere Laufzeitumgebung 20, eine passagierbezogene erste Laufzeitumgebung 22 und eine zweite Laufzeitumgebung 22 eine fahrerbezogene zweite Laufzeitumgebung 23 sein kann. Durch die erste Laufzeitumgebung 22 kann beispielsweise zumindest eine passagierspezifische Applikation 24, beispielsweise eine Steuerung einer Medienwiedergabe, wie beispielsweise einer Videowiedergabe, und/oder ein Internetbrowser betrieben werden, die für einen Beifahrer oder Passagier vorgesehen sein kann. Durch die zweite Laufzeitumgebung 23 kann zumindest eine fahrzeugführungsbezogene Applikation 25 für die Fahrzeugführung ausgeführt oder betrieben werden, beispielsweise eine Navigationsassistenz, die für den Fahrer vorgesehen sein kann. Durch die jeweilige Applikation kann in an sich bekannter Weise eine jeweilige Benutzerschnittstelle 26, 27 (User Interface) bereitgestellt werden. Zum Anzeigen der jeweiligen Benutzerschnittstelle 26, 27 kann in der jeweiligen Laufzeitumgebung 22, 23 jeweils ein Ausgabemodul 30, 31 betrieben werden, das beispielsweise dafür vorgesehen sein kann, die Bildausgabeschnittstelle 19 anzusteuern. Durch das jeweilige Ausgabemodul 30, 31 kann in an sich bekannter Weise beispielsweise ein Window-Manager und/oder ein Bedienmenü und/oder eine GUI implementiert oder realisiert sein. Die jeweilige Berührungseingabe 16 kann beispielsweise durch ein jeweiliges Eingabemodul 32, 33 der jeweiligen Laufzeitumgebung 22, 23 dahingehend verarbeitet oder interpretiert werden, dass die durch Berührdaten der Berührungseingabe 16 signalisierte Berührkoordinaten des Berührorts 15 in an sich bekannter Weise dazu genutzt werden, die jeweilige Benutzerschnittstelle 26, 27 in der jeweiligen Laufzeitumgebung 22, 23 anzusteuern.

An welche der beiden Laufzeitumgebungen 22, 23 und damit an welches der Eingabemodule 32, 33 eine jeweilige Berührungseingabe 16 geleitet wird, kann beispielsweise durch die Systemumgebung 21 mittels einer Eingabemanagementeinheit 40 gesteuert werden, welche die Berührungseingabe 16 empfangen und zusätzlich aus einem Eingabeursprungsdetektor 50 ein Signal S empfangen kann, welches signalisiert, aus welchem von mehreren vordefinierten Ursprungsbereichen 51, 52 die Berührungseingabe 16 empfangen wurde.

Der Ursprungsbereich 51 kann beispielsweise durch den Beifahrersitz des Benutzers U1 definiert sein; der Ursprungsbereich 52 kann durch den Fahrersitz des Benutzers U2, das heißt den Fahrer, definiert sein, also das jeweils darüber befindliche Raumvolumen betreffen.

Durch den Eingabeursprungsdetektor 50 kann mittels zumindest eines Innenraumsensors 53 erfasst werden, welcher der Benutzer U1, U2, das heißt aus welchem Ursprungsbereich 51, 52, heraus die Berührungseingabe 16 erfolgt ist. Hierzu kann beispielsweise mittels einer Innenraumkamera oder durch die bereits beschriebenen Näherungssensoren ermittelt werden, aus welcher Richtung und insbesondere aus welchem der Ursprungsbereiche 51, 52 heraus ein Eingabeelement 60 auf das Bedienfeld 14 zum Berührort 15 hin ragt. Mittels einer Innenraumkamera kann dies beispielsweise auf Grundlage eines Körpermodells einer Person erfolgen, das in die Bilddaten der Innenraumkamera eingepasst werden kann. Hierzu kann beispielsweise die an sich bekannte Programmbibliothek Kinnect ^{™} des Unternehmens Microsoft ^{™} genutzt werden. Die sich ergebende Pose des eingepassten Körpermodell zeigt, in welchem Ursprungsbereich sich die Person befinden muss. Mittels zweier Körpermodelle kann auch eine gleichzeitige Berührung aus zwei Ursprungsbereichen heraus ausgewertet werden, wie dies gemäß einer Weiterbildung in der beschriebenen Weise vorgesehen ist.

Mittels des Signals S kann die Eingabemanagementeinheit 40 auf der Grundlage von Zuordnungsdaten 70 zuordnen, welche der beiden Laufzeitumgebungen 22, 23, das heißt an welches Eingabemodul 32, 33 die aktuelle Berührungseingabe 16 signalisiert oder weitergeleitet werden soll. Durch die Zuordnungsdaten 70 kann der Ursprungsbereich 51 der Laufzeitumgebung 22 (passagierbezogene Benutzerschnittstelle 26) und eine Berührungseingabe aus dem Ursprungsbereich 52 der Laufzeitumgebung 23 (fahrerbezogene Benutzerschnittstelle 27) weitergeleitet werden.

Die jeweilige Benutzerschnittstelle 26, 27 kann auf der Bildanzeigeeinheit 12 als Anzeigeinhalt 13 jeweils abwechselnd oder kombiniert gleichzeitig dargestellt werden. Hierzu kann eine entsprechende Anzeigemanagementeinheit 80 beispielsweise durch die Systemumgebung 21 betrieben werden. Die Anzeigemanagementeinheit 80 kann beispielsweise zwischen Anzeigeinhalten oder Bilddaten der Ausgabemodule 30, 31 umschalten oder wechseln. Dies kann in Abhängigkeit von dem Signal S, das den aktuell detektierten Ursprungsbereich 51, 52 signalisiert, in der beschriebenen Weise erfolgen. Eine komponierte oder kombinierte gleichzeitige Darstellung beider Benutzerschnittstellen 26, 27 kann beispielsweise durch Aufteilen der Anzeigefläche des Anzeigeinhalts 13 beziehungsweise der Bildanzeigeeinheit 12 erfolgen. Zusätzlich kann ein Systemanzeigebereich 31 für eine Systembedienschnittstelle 82 auf der Bildanzeigeeinheit 12 reserviert sein und/oder es kann in der beschriebenen Weise eine temporäre Systembedienschnittstelle den Benutzerschnittstellen 26, 27 auf der Bildanzeigeeinheit 12 überlagert werden. Die entsprechende Weiterleitung der Berührungseingabe 16 kann in der beschriebenen Weise in diesem Fall erfolgen.

Insbesondere ergeben sich damit eine Systemarchitektur und ein Verfahren für den Betrieb eines Infotainment-Systems in einem Fahrzeug,
- das die Ausgabe und Eingabe von zwei Benutzern für zwei unabhängige IVI-Partitionen (Laufzeitumgebungen, IVI - In-Vehicle-Infotainment) auf demselben berührungsempfindlichen Bildschirm ermöglicht
- und die sich durch folgende Merkmale auszeichnet:
   ∘ die beiden IVI-Benutzerschnittstellen werden in einem überlappenden und nicht exklusiven Bereich desselben Displays angezeigt
   ∘ die Bestimmung, zu welcher IVI-Partition eine Benutzereingabe gehört, basiert auf einer Erkennung, von wo eine bestimmte Benutzereingabe stammt, ggf. in Kombination mit den Berührungskoordinaten der resultierenden Berührungseingabe.

Die Architektur und Methode besteht aus [siehe auch die Figur] einem Fahrzeug, das mindestens umfasst:
- a 1^{st} IVI_Partition (zweite Laufzeitumgebung) für die Ausführung fahrerbezogener Infotainment-Funktionen (IVI) einschließlich der HMI-Inhalte, die auf dem IVI-Display angezeigt werden,
- a 2^{nd} IVI2_Partition (erste Laufzeitumgebung) zur Ausführung von fahrgastorientierten Infotainment-Funktionen (IVI) einschließlich der HMI-Inhalte, die auf dem IVI-Display angezeigt werden,
- ein IVI_Display, das für die Anzeige der HMI-Ausgabe von IVI_Partition und IVI2_Partition verwendet wird und ein berührungsbasiertes Gerät ist, das Berührungseingaben verarbeitet und an das Infotainment System für Benutzereingaben weiterleitet,
- ein Input_Framework_IVI (jeweiliges Eingabemodulinnerhalb der IVI_Partition), das Benutzereingabeereignisse vom Input_Manager empfängt und sie an die entsprechende Anwendung/HMI innerhalb der IVI_Partition weiterleitet,
- ein Input_Framework_IVI2 (innerhalb der IVI2_Partition), das Benutzereingabeereignisse vom Input_Manager empfängt und sie an die entsprechende Anwendung/HMI innerhalb der IVI2_Partition weiterleitet,
- einen Input_Manager (Eingabemanagementeinheit),
   ∘ die Benutzereingabeereignisse vom berührungsaktivierten IVI_Display empfängt,
   ∘ die die Information, ob die Berührungseingabe vom Fahrer oder vom Beifahrer stammt, von einer Input_Originator_Detection-Komponente (Eingabeursprungsdetektor) erhält
   ∘ und der die empfangenen Benutzereingabeereignisse auf der Grundlage der Informationen (z. B. Fahrer oder Beifahrer) von Input_Originator_Detection entweder an Input_Framework_IVI oder an Input_Framework_IVI2 weiterleitet,
- eine Komponente Input_Originator_Detection, die Sensordaten von einem Input_Originator_Sensor (Sensor) empfängt und aus diesen Sensordaten den Eingangsverursacher (Ursprungsbereich) bestimmt,
- einen Input_Originator_Sensor, der Sensordaten erfasst, aus denen der Urheber (z. B. Fahrer oder Beifahrer) einer Berührungseingabe abgeleitet werden kann, z. B. eine Innenraumkamera oder ein elektrischer Feldsensor (Näherungssensor).

Im Folgenden sind Themen aufgeführt, die Aspekte der Bedienvorrichtung erweitern:
- Die Information, ob die Berührungseingabe vom Fahrer oder vom Beifahrer stammt, erhält der Display_Manager ebenfalls von der Input_Originator_Detection. Abhängig von dieser Information schaltet der Display_Manager den auf dem IVI_Display anzuzeigenden Inhalt von dem von IVI_Partition erzeugten auf den von IVI2_Partition erzeugten um. Die Umschaltung der Display-Ausgabe und der Benutzereingabe auf/von einer IVI-Partition auf die andere erfolgt synchron. Die Umschaltung erfolgt z. B., wenn IVI_Partition angezeigt wird und der erkannte Eingangsverursacher der Beifahrer ist oder wenn IVI2_Partition angezeigt wird und der erkannte Eingangsverursacher der Fahrer ist.
- Das IVI_Display wird durch die Unterstützung eines schaltbaren Privatsphärenmodus erweitert (der die Displayausgabe vor dem Fahrer verbirgt, aber dem Beifahrer anzeigt, wenn er eingeschaltet ist, und allen anzeigt, wenn er ausgeschaltet ist), um die Ablenkung des Fahrers während der Fahrt zu vermeiden. Abhängig von der Information, ob die Berührungseingabe vom Fahrer oder vom Beifahrer aus der Input_Originator_Detection stammt, schaltet der Display_Manager den schaltbaren Privatmodus des Displays um. Das Umschalten des schaltbaren Fahrmodus von ein/aus auf aus/ein erfolgt synchron mit dem Umschalten des Displayausgangs. Das Umschalten des umschaltbaren Fahrmodus auf ein erfolgt z. B., wenn IVI_Partition angezeigt wird (umschaltbarer Fahrmodus ist aus) und der erkannte Eingangsverursacher der Beifahrer ist oder umgekehrt, wenn IVI2_Partition angezeigt wird (umschaltbarer Fahrmodus ist ein) und der erkannte Eingangsverursacher der Fahrer ist.
- Die Umschaltung des schaltbaren Sichtschutzmodus durch den Display_Manager berücksichtigt als weitere Eingabe, ob Inhalte angezeigt werden, die als fahrerablenkende Inhalte eingestuft werden.
- Zusätzlich zu den Inhalten aus IVI_Partition und IVI2_Partition werden bevorzugt auch Anzeigeinhalte aus der SYS_Partition (Systemumgebung) auf dem IVI_Display angezeigt. Dabei kann es sich um Inhalte handeln, die die Inhalte der IVI_Partition/IVI2_Partition temporär überlagern, wie z.B. eine Rück-/Dachansicht oder eine Warnanzeige, oder um Inhalte, die quasi permanent angezeigt werden, wie z.B. eine feste Systemsteuerungsleiste für die Klimasteuerung und/oder die Steuerung von Fahrzeugfunktionen.
- Insbesondere für den Fall, dass die SYS_Partition Inhalte wie eine Rück- oder Obersichtsanzeige anzeigt, die die Inhalte der IVI_Partition/IVI2_Partition vorübergehend im selben Anzeigebereich überlagert, wird der Eingabefokus auf diese Anzeige gelegt, wenn eine solche Bedingung eintritt, und an die Partition zurückgegeben, die zuvor den Fokus hatte, wenn die Bedingung endet. In ähnlicher Weise wird gegebenenfalls der umschaltbare Privatsphärenmodus ausgeschaltet, wenn eine solche Bedingung eintritt, und wieder eingeschaltet, wenn die Bedingung endet, wenn er vor dem Auftreten der Bedingung eingeschaltet war.
- Insbesondere für den Fall, dass die SYS_Partition Inhalte anzeigt, die quasi permanent angezeigt werden, wie z.B. eine feste Systemsteuerungsleiste für die Klimasteuerung, verwendet der Input_Manger die Information, ob die Berührungseingabe vom Fahrer oder Beifahrer stammt, sowie die Berührungskoordinaten für die Entscheidung, an welche Partition (SVS_Partition/IVI_Partition/IVI2_Partition) die Berührungseingabeereignisse weitergeleitet werden.
- Insbesondere für den Fall, dass die SYS_Partition Inhalte anzeigt, die quasi permanent angezeigt werden, wie z.B. eine feste Systemsteuerungsleiste für die Klimasteuerung, wird das IVI_Display um die Unterstützung mehrerer (mindestens 2) schaltbarer Privacy Modes erweitert. In einer solchen Konfiguration wäre für den Anzeigebereich, in dem z.B. die feste Systemsteuerungsleiste für die Klimasteuerung angezeigt wird, der schaltbare Privatsphärenmodus permanent ausgeschaltet, während er für den anderen Anzeigebereich abhängig von der Information, ob die Berührungseingabe vom Fahrer oder vom Beifahrer stammt, wie oben beschrieben geschaltet wird.
- Das IVI_Display ist in einer Weiterbildung um die Fähigkeit erweitert, zwei unabhängige Inhalte gleichzeitig auf der gleichen Anzeigefläche darzustellen. Blickwinkelabhängig (switchable privacy film) kann der 1. Inhalt (der aus IVI_Partition, zweite Laufzeitumgebung) vom Fahrer gesehen werden, während der 2. Inhalt (der aus IVI2_Partition, erste Laufzeitumgebung) vom Beifahrer gesehen werden kann. Der Input_Manager leitet die empfangenen Benutzereingabeereignisse (auch mehrere gleichzeitig) vom IVI_Display auf der Grundlage der Informationen (z. B. Fahrer oder Beifahrer) aus der Input_Originator_Detection entweder an die IVI_Partition oder an die IVI2_Partition weiter. Falls auf einem solchen Display auch Inhalte der SYS_Partition angezeigt werden (vorübergehend oder permanent (siehe oben)), verwendet der Input_Manger die Information, ob die Berührungseingabe vom Fahrer oder vom Beifahrer stammt, sowie die Berührungskoordinaten für die Entscheidung, an welche Partition (SVS_Partition/IVI_Partition/IVI2_Partition) die Berührungseingabeereignisse weitergeleitet werden.

Im Folgenden werden Themen aufgeführt, die Aspekte der Bedienvorrichtung konkretisieren:
- Die verwendete Input Originator Detection/Sensor Technologie ist kamerabasiert, wobei eine Innenraumkamera so in das Fahrzeug eingebaut ist, **dass sie** die Benutzereingabe auf dem IVI_Display einschließlich des Urhebers der Benutzereingabe bzw. der Richtung, aus der die Benutzereingabe stammt, beobachten kann. Die Funktion Input_Originator_Detection kann integriert mit dem Input_Originator_Sensor oder innerhalb des Infotainment Systems oder eines anderen Steuergeräts im Fahrzeug implementiert werden.
- Die verwendete Technologie zur Erkennung/Sensorik des Eingangsursprungs basiert auf einem elektrischen Feldsensor (Näherungssensor), wobei der Eingangsursprungsensor in das IVI_Display integriert oder in der Nähe des IVI_Displays implementiert ist. Die Funktion Input_Originator_Detection kann integriert mit dem Input_Originator_Sensor, integriert im IVI_Display oder im Infotainment System implementiert werden.
- Die Infotainment-Partitionen (IVI_Partition und/oder IVI2_Partition) basieren auf Android OS/Framework bzw. Android Automotive OS/Framework.
- Die Systempartitionen (SYS_Partition) basieren auf Linux.

Im Folgenden werden technische Ausgestaltungsmöglichkeiten aufgeführt:
- Die IVI_Partition ist auf einem 1^{st} SoC und die IVI2_Partition auf einem 2^{nd} SoC implementiert.
- Die IVI_Partition und die IVI2_Partition sind auf einem SoC implementiert, wobei die zugrunde liegende Systemarchitektur und die auf dem CPU-Subsystem des SoC laufende Software auf einem Virtualisierungsansatz mit einem Hypervisor als Basis und der Ausführung der IVI_Partition und der IVI2_Partition als virtuelle Maschinen auf dem Hypervisor basieren.
- Falls es keine SYS_Partition gibt:
   ∘ Der Input_Manager und der Display_Manager sind in IVI_Partition implementiert.
   ∘ Die Funktion Input_Originator_Detection ist in IVI_Partition implementiert.
- Falls es eine SYS_Partition gibt:
   ∘ Die SYS_Partition ist als weitere virtuelle Maschine auf dem Hypervisor implementiert, die die IVI_Partition ausführt.
   ∘ Der Input_Manager und der Display_Manager sind in SYS_Partition implementiert.
   o Die Funktion Input_Originator_Detection ist in SYS_Partition implementiert.
- Die verwendete Schnittstellentechnologie zur Weiterleitung der Displayausgabe an das IVI_Display basiert auf LVDS (Low-Voltage Differential Signaling).
- Die verwendete Schnittstelle für den Empfang von Benutzereingabe-Touch-Ereignissen von der IVI_Anzeige erfolgt über einen Rückkanal der Technologie zur Weiterleitung der Anzeigeausgabe an die IVI_Anzeige.
- Die verwendete Schnittstelle für den Empfang von Benutzereingabe-Touch-Events vom IVI_Display erfolgt über eine separate Schnittstelle, die z. B. auf CAN/CANFD-Technologie basiert. In diesem Fall können die Berührungseingaben über CAN/CANFD in einer separaten MCU (Micro-Controller Unit) empfangen werden, die die Ereignisse an den Input_Manager weiterleitet (z. B. über eine serielle Schnittstelle).

Die Vorteile der Bedienvorrichtung sind:
- Die Bedienvorrichtung ermöglicht die Nutzung eines Displays für zwei verschiedene, unabhängige Inhalte und hilft so, Kosten zu sparen.
- Die Bedienvorrichtung ermöglicht die Nutzung eines Displays für zwei unterschiedliche, voneinander unabhängige Inhalte und gibt damit Freiraum für die Innenraumgestaltung des Fahrzeugs.

Insgesamt zeigen die Beispiele, wie richtungsabhängige Steuerung eines Infotainmentsystems bereitgestellt werden kann.

## Patentansprüche

1. Verfahren zum Betreiben einer Bedienvorrichtung (11) eines Kraftfahrzeugs (10), wobei
• durch eine Prozessorschaltung (17) der Bedienvorrichtung (11) zumindest zwei Laufzeitumgebungen (20, 22, 23) mit einer jeweiligen eigenen graphischen Benutzerschnittstelle (26, 27) unabhängig voneinander betrieben werden, wobei die Laufzeitumgebungen (20, 22, 23) jeweils als ein Betriebssystem betrieben werden und die Laufzeitumgebungen (20, 22, 23) mittels unterschiedlicher virtueller Maschinen und/oder mittels unterschiedlicher Prozessoren der Prozessorschaltung (17) betrieben werden, wobei
• durch ein für die Laufzeitumgebungen (20, 22, 23) bereitgestelltes, gemeinsames berührungssensitives Bedienfeld (14) der Bedienvorrichtung (11) Berührungseingaben (16) eines jeweiligen Eingabeelements (60) zumindest eines Benutzers empfangen und an eine Eingabemanagementeinheit (40) der Bedienvorrichtung (11) signalisiert werden und
• durch einen Eingabeursprungsdetektor (50) der Bedienvorrichtung (11) vor und/oder während der jeweiligen Berührungseingabe (16) detektiert wird, von welchem aus mehreren vordefinierten Ursprungsbereichen (51, 52) her das Eingabeelement (60) auf das Bedienfeld (14) ragt, und der detektierte Ursprungsbereich (51, 52) an die Eingabemanagementeinheit (40) signalisiert wird und
• durch die Eingabemanagementeinheit (40) dem signalisierten Ursprungsbereich (51, 52) gemäß in der Eingabemanagementeinheit (40) bereitgestellten Zuordnungsdaten (70) eine der Laufzeitumgebungen (20, 22, 23) zugeordnet wird und die jeweilige signalisierte Berührungseingabe (16) an die dem signalisierten Ursprungsbereich (51, 52) zugeordnete Laufzeitumgebung (20, 22, 23) weitergeleitet wird, wo ein Eingabemodul (32) der Laufzeitumgebung (20, 22, 23) deren Benutzerschnittstelle (26, 27) gemäß der weitergeleiteten Berührungseingabe (16) ansteuert.

2. Verfahren nach Anspruch 1, wobei durch eine Anzeigemanagementeinheit (80) die erste und die zweite Benutzerschnittstelle (26, 27) auf derselben Bildanzeigeeinheit (12) gleichzeitig und/oder abwechselnd angezeigt werden.

3. Verfahren nach Anspruch 2, wobei eine schaltbar ausgestaltete Abschirmschicht in einem ersten Schaltzustand eine gerichtete Lichtabgabe von Licht der Bildanzeigeeinheit (12) in einen ersten der Ursprungsbereiche (51, 52) und eine gleichzeitige Blockade der Lichtabgabe in einen vorbestimmten zweiten der Ursprungsbereiche (51, 52) bereitstellt und in einem zweiten Schaltzustand die Lichtabgabe in den zweiten Ursprungsbereich (51, 52) zulässt und durch die Anzeigemanagementeinheit (80) ein Schaltsignal zum Umschalten der Abschirmschicht zwischen den beiden Schaltzuständen in Abhängigkeit von dem jeweils signalisierten Ursprungsbereich (51, 52) erzeugt wird und hierbei bei einer Berührungseingabe (16) aus dem zweiten Ursprungsbereich (51, 52) den zweiten Schaltzustand einstellt und/oder eingestellt hält.

4. Verfahren nach Anspruch 3, wobei das Schaltsignal zum Einstellen des ersten Schaltzustands erzeugt wird, falls eine Signalquelle signalisiert, dass durch die Signalquelle in einem von der Abschirmschicht bedeckten Anzeigebereich der Bildanzeigeeinheit (12) ausgegebener Anzeigeinhalt (13) einer vorbestimmten Kategorie ist, die vom zweitem Ursprungsbereich (51, 52) aus uneinsehbar sein soll.

5. Verfahren nach einem der Ansprüche 2 bis 4, wobei durch die Anzeigemanagementeinheit (80)
• eine temporäre graphische Systembedienschnittstelle (82) einer Systemumgebung (21) der Prozessorschaltung (17) temporär die jeweilige Benutzerschnittstelle (26, 27) der ersten und/oder der zweiten Laufzeitumgebung (20, 22, 23) überlagert und/oder
• eine permanente Systembedienschnittstelle (82) der Systemumgebung (21) während des Betriebs dauerhaft in einem Systemanzeigebereich (31) der Bildanzeigeeinheit (12) eingeblendet wird.

6. Verfahren nach Anspruch 5, wobei während des Überlagerns der temporären Systembedienschnittstelle (82) die jeweilige Berührungseingabe unabhängig von dem jeweils signalisierten Ursprungsbereich (51, 52) an die Systemumgebung (21) weitergeleitet wird, wo ein Eingabemodul der Systemumgebung (21) die temporäre Systembedienschnittstelle (82) gemäß der Berührungseingabe (16) ansteuert.

7. Verfahren nach Anspruch 5 oder 6 im jeweiligen Rückbezug auf Anspruch 4 oder 3, wobei während des Überlagerns der temporären Systembedienschnittstelle (82) die Abschirmschicht in den zweiten Schaltzustand geschaltet wird und/oder geschaltet gehalten wird.

8. Verfahren nach einem der Ansprüche 5 bis 7, wobei durch die Eingabemanagementeinheit (40) an die permanente Systembedienschnittstelle (82) eine Berührungseingabe (16), in einem auf dem Bedienfeld (14) dem Systemanzeigebereich (31) zugeordneten Erfassungsbereich erfasst wird, zusammen mit dem signalisierten Ursprungsbereich (51, 52) signalisiert wird.

9. Verfahren nach einem der vorhergehenden Ansprüche 2 bis 8, wobei durch die Anzeigemanagementeinheit (80) die erste und die zweite Benutzerschnittstelle (26, 27) abwechselnd angezeigt werden und ein Umschalten jeweils abhängig von dem durch den Eingabeursprungsdetektor (50) signalisierten Ursprungsbereich (51, 52) auf die Benutzerschnittstelle (26, 27) derjenigen Laufzeitumgebung (20, 22, 23) erfolgt, an welche auch die Berührungseingabe (16) weitergeleitet wird.

10. Verfahren nach einem der Ansprüche 2 bis 8, wobei durch die Anzeigemanagementeinheit beide Benutzerschnittstellen (26, 27) gleichzeitig in unterschiedlichen Anzeigebereichen der Bildanzeigeeinheit (12) angezeigt werden und eine jeweilige Berührungseingabe (16) nur an die jeweilige Laufzeitumgebung (20, 22, 23) durch die Eingabemanagementeinheit (40) weitergeleitet wird, falls die Berührungseingabe (16) in dem Anzeigebereich der Benutzerschnittstelle (26, 27) dieser Laufzeitumgebung (20, 22, 23) liegt und der signalisierten Ursprungsbereich (51, 52) gemäß den Zuordnungsdaten (70) dieselbe Laufzeitumgebung (20, 22, 23) angibt.

11. Verfahren nach Anspruch 10, wobei mittels einer Multi-Touch-Technologie mehrere Berührungseingaben (16) gleichzeitig an unterschiedlichen Berührorten (15) des berührungssensitiven Bedienfelds (14) erfasst werden.

12. Verfahren nach einem der vorhergehenden Ansprüche, wobei durch den Eingabeursprungsdetektor (50) der jeweilige Ursprungsbereich (51, 52) durch Erfassen des Eingabeelements (60) mittels zumindest eines Innenraumsensors (53), insbesondere einer Innenraumkamera und/oder eines Näherungssensors des Bedienfelds (14), erfasst wird.

13. Bedienvorrichtung (11) für ein Kraftfahrzeug (10), aufweisend ein berührungssensitives Bedienfeld (14), wobei mit dem Bedienfeld (14) eine Prozessorschaltung (17) gekoppelt ist und wobei die Bedienvorrichtung (11) dazu eingerichtet ist, ein Verfahren nach einem der Ansprüche 1 bis 12 durchzuführen.

14. Kraftfahrzeug (10) aufweisend eine Bedienvorrichtung (11) nach Anspruch 13.

## Claims

1. A method for operating an operating device (11) of a motor vehicle (10), wherein
• at least two runtime environments (20, 22, 23) each comprising their own graphical user interface (26, 27) are operated independently of one another by a processor circuit (17) of the operating device (11), wherein the runtime environments (20, 22, 23) are each operated as an operating system and the runtime environments (20, 22, 23) are operated by means of different virtual machines and/or by means of different processors of the processor circuit (17), wherein
• touchscreen inputs (16) from a relevant input element (60) of at least one user are received and signaled to an input management unit (40) of the operating device (11) by a shared touch-sensitive operating panel (14) of the operating device (11), which panel is provided for the runtime environments (20, 22, 23), and
• an input origin detector (50) of the operating device (11) is used to detect, before and/or during the relevant touchscreen input (16), from which of a plurality of predefined regions of origin (51, 52) the input element (60) protrudes onto the operating panel (14), and the detected region of origin (51, 52) is signaled to the input management unit (40), and
• the input management unit (40) assigns one of the runtime environments (20, 22, 23) to the signaled region of origin (51, 52) in accordance with assignment data (70) provided in the input management unit (40) and forwards the relevant signaled touchscreen input (16) to the runtime environment (20, 22, 23) assigned to the signaled region of origin (51, 52), where an input module (32) of the runtime environment (20, 22, 23) actuates its user interface (26, 27) in accordance with the forwarded touchscreen input (16).

2. The method according to claim 1, wherein a display management unit (80) simultaneously and/or alternately displays the first and the second user interface (26, 27) on the same image display unit (12).

3. The method according to claim 2, wherein a shielding layer configured to be switchable provides, in a first switching state, a directed emission of light from the image display unit (12) into a first of the regions of origin (51, 52) and simultaneous blocking of the emission of light into a predetermined second of the regions of origin (51, 52) and permits, in a second switching state, the emission of light into the second region of origin (51, 52), and the display management unit (80) generates a switching signal for switching the shielding layer between the two switching states on the basis of the respectively signaled region of origin (51, 52) and, in so doing, sets the second switching state and/or keeps it set when there is a touchscreen input (16) from the second region of origin (51, 52).

4. The method according to claim 3, wherein the switching signal is generated to set the first switching state if a signal source signals that display content (13) output by the signal source in a display region of the image display unit (12) that is covered by the shielding layer is in a predetermined category which is supposed to be hidden from view from the second region of origin (51, 52).

5. The method according to any of claims 2 to 4, wherein, by means of the display management unit (80),
• a temporary graphical system operating interface (82) of a system environment (21) of the processor circuit (17) is temporarily superimposed on the relevant user interface (26, 27) of the first and/or the second runtime environment (20, 22, 23) and/or
• a permanent system operating interface (82) of the system environment (21) is permanently shown in a system display region (31) of the image display unit (12) during operation.

6. The method according to claim 5, wherein, while the temporary system operating interface (82) is superimposed, the relevant touchscreen input is forwarded to the system environment (21) irrespective of the respectively signaled region of origin (51, 52), where an input module of the system environment (21) actuates the temporary system operating interface (82) in accordance with the touchscreen input (16).

7. The method according to claim 5 or 6 with a dependency reference to claim 4 or 3, respectively, wherein, while the temporary system operating interface (82) is superimposed, the shielding layer is switched into the second switching state and/or kept switched into this state.

8. The method according to any of claims 5 to 7, wherein the input management unit (40) signals a touchscreen input (16) detected in a detection region assigned to the system display region (31) on the operating panel (14) to the permanent system operating interface (82) together with the signaled region of origin (51, 52).

9. The method according to any of the preceding claims 2 to 8, wherein the display management unit (80) alternately displays the first and the second user interface (26, 27), and switching to the user interface (26, 27) of the runtime environment (20, 22, 23) to which the touchscreen input (16) is also forwarded is carried out in each case depending on the region of origin (51, 52) signaled by the input origin detector (50).

10. The method according to any of claims 2 to 8, wherein the display management unit displays both user interfaces (26, 27) simultaneously in different display regions of the image display unit (12), and a relevant touchscreen input (16) is only forwarded to the relevant runtime environment (20, 22, 23) by the input management unit (40) if the touchscreen input (16) is located in the display region of the user interface (26, 27) of this runtime environment (20, 22, 23) and the signaled region of origin (51, 52) specifies the same runtime environment (20, 22, 23) in accordance with the assignment data (70).

11. The method according to claim 10, wherein a plurality of touchscreen inputs (16) are detected simultaneously at different touch locations (15) on the touch-sensitive operating panel (14) by means of multi-touch technology.

12. The method according to any of the preceding claims, wherein the input origin detector (50) detects the relevant region of origin (51, 52) by detecting the input element (60) by means of at least one interior sensor (53), in particular an interior camera and/or a proximity sensor of the operating panel (14).

13. An operating device (11) for a motor vehicle (10), comprising a touch-sensitive operating panel (14), wherein a processor circuit (17) is coupled to the operating panel (14) and wherein the operating device (11) is configured to carry out a method according to any of claims 1 to 12.

14. A motor vehicle (10) comprising an operating device (11) according to claim 13.

## Revendications

1. Procédé de fonctionnement d'un dispositif de commande (11) d'un véhicule automobile (10), dans lequel
• au moins deux environnements d'exécution (20, 22, 23), dotés de leur propre interface utilisateur graphique (26, 27) respective, sont exploités indépendamment les uns des autres par l'intermédiaire d'un circuit processeur (17) du dispositif de commande (11), les environnements d'exécution (20, 22, 23) fonctionnant respectivement comme un système d'exploitation et les environnements d'exécution (20, 22, 23) étant exploités au moyen de différentes machines virtuelles et/ou au moyen de différents processeurs du circuit processeur (17),
• des entrées tactiles (16) d'un élément d'entrée (60) respectif d'au moins un utilisateur sont reçues et signalées à une unité (40) de gestion des entrées du dispositif de commande (11), par l'intermédiaire d'un panneau de commande (14) tactile commun du dispositif de commande (11) mis à disposition pour les environnements d'exécution (20, 22, 23), et
• un détecteur (50) d'origine d'entrée du dispositif de commande (11) détecte, avant et/ou pendant l'entrée tactile (16) respective, laquelle d'une pluralité de zones d'origine (51, 52) prédéfinies correspond à l'élément d'entrée (60) mis en évidence sur le panneau de commande (14), et la zone d'origine (51, 52) détectée est signalée à l'unité (40) de gestion des entrées et
• l'un des environnements d'exécution (20, 22, 23) est attribué à la zone d'origine (51, 52) signalée par l'intermédiaire de l'unité (40) de gestion des entrées conformément à des données d'affectation (70) fournies au sein de l'unité (40) de gestion des entrées, et l'entrée tactile (16) signalée respective est transmise à l'environnement d'exécution (20, 22, 23) attribué à la zone d'origine (51, 52) signalée, où un module d'entrée (32) de l'environnement d'exécution (20, 22, 23) commande son interface utilisateur (26, 27) conformément à l'entrée tactile (16) transmise.

2. Procédé selon la revendication 1, dans lequel la première et la seconde interfaces utilisateurs (26, 27) sont affichées simultanément et/ou en alternance sur le même dispositif d'affichage (12) par l'intermédiaire d'une unité (80) de gestion d'affichage.

3. Procédé selon la revendication 2, dans lequel une couche de protection commutable, dans un premier état de commutation, assure une émission lumineuse dirigée de lumière depuis l'unité (12) d'affichage d'images vers une première des zones d'origine (51, 52) et un blocage simultané de l'émission lumineuse vers une seconde des zones d'origine (51, 52) prédéterminée et, dans un second état de commutation, autorise l'émission de lumière vers la seconde zone d'origine (51, 52), et par l'intermédiaire de l'unité (80) de gestion d'affichage un signal de commutation est généré pour commuter la couche de protection entre les deux états de commutation en fonction de la zone d'origine (51, 52) respectivement signalée et, dans ce contexte, en cas d'entrée tactile (16) provenant de la seconde zone d'origine (51, 52), le second état de commutation est établi ou/et maintenu.

4. Procédé selon la revendication 3, dans lequel le signal de commutation destiné à établir le premier état de commutation est généré lorsqu'une source de signal indique que le contenu d'affichage (13) émis par la source de signal dans une zone d'affichage de l'unité (12) d'affichage d'images recouverte par la couche de protection appartient à une catégorie prédéterminée qui doit être masquée par rapport à la seconde zone d'origine (51, 52).

5. Procédé selon l'une des revendications 2 à 4, dans lequel, par l'intermédiaire de l'unité (80) de gestion d'affichages
• une interface (82) système graphique temporaire d'un environnement système (21) du circuit processeur (17) se superpose temporairement à l'interface utilisateur (26, 27) respective du premier et/ou du second environnement d'exécution (20, 22, 23) et/ou
• une interface (82) système permanente de l'environnement système (21) s'affiche en permanence, pendant le fonctionnement, dans une zone (31) d'affichage système de l'unité (12) d'affichage d'images.

6. Procédé selon la revendication 5, dans lequel, pendant la superposition de l'interface (82) système temporaire, l'entrée tactile respective est transmise, indépendamment de la zone d'origine (51, 52) signalée respective, à l'environnement système (21), où un module d'entrée de l'environnement système (21) commande l'interface (82) système temporaire en fonction de l'entrée tactile (16).

7. Procédé selon la revendication 5 ou 6, en référence respective à la revendication 4 ou 3, dans lequel, pendant la superposition de l'interface (82) système temporaire, la couche de protection est commutée vers le second état de commutation et/ou est maintenue commutée.

8. Procédé selon l'une des revendications 5 à 7, dans lequel par l'intermédiaire de l'unité (40) de gestion des entrées, sur l'interface (82) système permanente, une entrée tactile (16) est détectée dans une zone de détection sur le panneau de commande (14) associée à la zone (31) d'affichage de système, et est signalée conjointement avec la zone d'origine (51, 52) signalée.

9. Procédé selon l'une des revendications précédentes 2 à 8, dans lequel la première et la seconde interfaces utilisateurs (26, 27) sont affichées en alternance par l'intermédiaire de l'unité (80) de gestion d'affichage et une commutation s'effectue, respectivement en fonction de la zone d'origine (51, 52) signalée par l'intermédiaire du détecteur (50) d'origine d'entrée, vers l'interface utilisateur (26, 27) de l'environnement d'exécution (20, 22, 23) vers lequel l'entrée tactile (16) est également transmise.

10. Procédé selon l'une des revendications 2 à 8, dans lequel les deux interfaces utilisateur (26, 27) sont affichées simultanément par l'intermédiaire de l'unité de gestion d'affichage dans des zones d'affichage différentes de l'unité (12) d'affichage d'images et une entrée tactile (16) respective n'est transmise qu'à l'environnement d'exécution (20, 22, 23) respectif par l'intermédiaire de l'unité (40) de gestion des entrées si l'entrée tactile (16) se trouve dans la zone d'affichage de l'interface utilisateur (26, 27) de cet environnement d'exécution (20, 22, 23) et que la zone d'origine (51, 52) signalée indique, conformément aux données d'affectation (70), le même environnement d'exécution (20, 22, 23).

11. Procédé selon la revendication 10, dans lequel plusieurs entrées tactiles (16) sont détectées simultanément en différents emplacements tactiles (15) du panneau de commande (14) tactile à l'aide d'une technologie multi-touch.

12. Procédé selon l'une des revendications précédentes, dans lequel la zone d'origine (51, 52) respective est détectée par l'intermédiaire du détecteur (50) d'origine d'entrée en détectant l'élément d'entrée (60) à l'aide d'au moins un capteur interne (53), notamment une caméra interne et/ou un capteur de proximité du panneau de commande (14).

13. Dispositif de commande (11) pour un véhicule automobile (10), comprenant un panneau de commande (14) tactile, dans lequel un circuit processeur (17) est couplé au panneau de commande (14) et dans lequel le dispositif de commande (11) est configuré pour mettre en œuvre un procédé selon l'une des revendications 1 à 12.

14. Véhicule automobile (10) comprenant un dispositif de commande (11) selon la revendication 13.
